# EUROPÄISCHE PATENTSCHRIFT

(11) **EP 0 460 155 B1**
(45) Veröffentlichungstag und Bekanntmachung des Hinweises auf die Patenterteilung: **27.04.1994**
(21) Anmeldenummer: 91900796.3
(22) Anmeldetag: 14.12.1990
(51) Int. Cl.: B60Q 1/38

(54) **ELEKTRISCHER SCHALTER, INSBESONDERE BLINKERSCHALTER FÜR KRAFTFAHRZEUGE**
ELECTRICAL SWITCH, IN PARTICULAR BLINKER SWITCH FOR MOTOR VEHICLES
COMMUTATEUR ELECTRIQUE, NOTAMMENT COMMUTATEUR DE CLIGNOTANT DE VEHICULES A MOTEUR

(30) Priorität: 23.12.1989 DE 3942925
(43) Veröffentlichungstag der Anmeldung: 11.12.1991
(73) Patentinhaber: ITT Automotive Europe GmbH, 60488 Frankfurt am Main (DE)
(72) Erfinder: NEUBAUER, Walter, D-7128 Lauffen (DE)
(86) Internationale Anmeldenummer: EP9002185
(87) Internationale Veröffentlichungsnummer: WO9109752

(56) Entgegenhaltungen:
- DE-A- 3 336 877
- DE-A- 3 336 878
- DE-A- 3 402 082

## Beschreibung

Die Erfindung betrifft einen elektrischen Schalter, der insbesondere als Blinkerschalter für Kraftfahrzeuge zur Anzeige einer Fahrtrichtungsänderung oder eines Fahrbahnwechsels verwendet wird und der einen in einem Schaltergehäuse gelagerten Mitnehmer aufweist, der vorzugsweise über einen Schalthebel aus einer Mittelstellung heraus nach entgegengesetzten Richtungen bewegbar, insbesondere um eine gehäusefeste Drehachse verschwenkbar ist.

Ein solcher elektrischer Schalter ist z. B. aus der DE-OS 36 26 241 bekannt. Dort sind in einem Schaltergehäuse ein mittlerer und zwei seitliche Festkontakte sowie eine bewegliche Kontkaktbrücke untergebracht, die mittig auf dem mittleren Festkontakt kippbar gelagert ist. In der Mittelstellung des Mitnehmers liegt diese Kontaktbrücke flächig auf dem mittleren Festkontakt auf. Bei einer Verschwenkung des Mitnehmers aus der Mittelstellung heraus wird die Kontaktbrücke um eine Kante des mittleren Festkontakts verkippt und schlägt auf einem seitlichen Festkontakt auf. Der mittlere Festkontakt ist dann mit diesem seitlichen Festkontakt elektrisch leitend verbunden, so daß z. B. die linken Blinkleuchten ein Signal abgeben, wenn der Schalter als Blinkerschalter verwendet wird. Bei diesem bekannten elektrischen Schalter ist zwar ein schnelles Umschalten der Kontaktbrücke möglich, allerdings ist die Schaltgeschwindigkeit durch ein langsames Bewegen des Schalthebels negativ beeinflußbar.

Ebenfalls aus der DE-OS 36 26 241, aber auch aus der DE-PS 33 36 877 ist eine Schalteinrichtung in sogenannter Klickser-Ausführung bekannt, bei der die Schaltgeschwindigkeit des beweglichen Kontakts nicht über das Betätigungsorgan beeinflußbar ist. Eine Schalteinrichtung in Klickser-Ausführung umfaßt einen Schnappkontaktbalken, der am einen Ende schwenkbar gelagert ist und am anderen Ende einen Rastkörper trägt. Ein weiterer Rastkörper, der mit einem Schaltstück bewegbar ist, das als Schieber geradlinig verschiebbar oder als Hebel verschwenkbar ist, liegt am Rastkörper des Schnappkontaktbalkens an. Wenigstens einer der Rastkörper ist in Längsrichtung des Schnappkontaktbalkens gegen eine Feder verschiebbar und wenigstens einer der Rastkörper trägt ein Keilprofil, mit dem er dem anderen Rastkörper zugewandt ist. Bei einer Betätigung des Schaltstücks gleitet der eine Rastkörper an der einen Flanke des Keilprofils des anderen Rastkörpers entlang, wobei die den einen Rastkörper belastende Feder zunehmend gespannt wird. Nach Überschreiten der Spitze des Keilprofils gleitet der erste Rastkörper auf der anderen Flanke des Keilprofils entlang, wobei sich die Feder entspannt und den Schnappkontaktbalken schlagartig umstellt. Da es nicht möglich ist, den einen Rastkörper auf der Spitze des Keilprofils des anderen Rastkörpers zu halten, ist die Umschaltgeschwindigkeit des Schnappkontaktbalkens nicht durch die Bewegungsgeschwindigkeit des Schaltstücks beeinflußbar.

Aufgabe der Erfindung ist es, einen elektrischen Schalter mit den Merkmalen aus dem Oberbegriff des Anspruchs 1 so weiterzuentwickeln, daß mit den elektrischen Kontakten hohe Schaltzahlen erreichbar sind und daß durch eine gedrängte Bauweise kleine Außenmaße des Schaltergehäuses ermöglicht werden.

Diese Aufgabe wird erfindungsgemäß dadurch gelöst, daß ein elektrischer Schalter, der die Merkmale aus dem Oberbegriff des Anspruchs 1 aufweist, zusätzlich mit den Merkmalen aus dem kennzeichnenden Teil dieses Anspruchs ausgestattet wird.

Bei einem erfindungsgemäßen elektrischen Schalter wird also bei einer Bewegung des Mitnehmers aus der Mittelstellung heraus oder in diese Mittelstellung zurück jeweils einer von zwei Klicksern betätigt, während der andere Klickser ruhen bleibt. Mit solchen Klicksern werden hohe Schaltzahlen erreicht. Im Sinne einer kompakten Bauweise wird für jeden Klickser ein Tastschieber verwendet. Jeder Schnappkontaktbalken ist an einem äußeren Ende nahe einer Seitenwand des Schaltergehäuses schwenkgelagert. Die beiden Tastschieber vor den inneren Enden der beiden Schnappkontaktbalken befinden sich, in ihrer Bewegungsrichtung betrachtet, nebeneinander. Insgesamt sind die beiden Klickser symmetrisch zur Mittelstellung des Mitnehmers angeordnet.

Vorteilhafte Ausgestaltungen eines erfindungsgemäßen elektrischen Schalters kann man den Unteransprüchen entnehmen.

Nach Anspruch 2 ist jeder der beiden Schnappkontaktbalken mit jeweils einem weiteren Festkontakt elektrisch leitend verbunden. Diese Verbindung wird vorteilhafterweise dadurch hergestellt, daß ein Schnappkontaktbalken an seinem äußeren Ende schneidenartig an dem ihm zugeordneten weiteren Festkontakt gelagert ist.

Um den Verschleiß am Mitnehmer und an den Tastschiebern gering zu halten, weisen der Mitnehmer und der Tastschieber zusammenwirkende Gleitschrägen auf. Eine Gleitschräge nur am Mitnehmer oder nur an den Tastschiebern erscheint weniger günstig.

Grundsätzlich ist eine Konstruktion möglich, bei der die beiden Federn, die die Tastschieber belasten, in der Mittelstellung des Mitnehmers entspannt sind, ein Tastschieber also gegen die ihn belastende Feder niedergedrückt wird, wenn man den Mitnehmer aus der Mittelstellung bewegt. Bei einer solchen Konstruktion kann man für jeden Tastschieber einen auf ihn auflaufenden Nocken am Mitnehmer vorsehen, der sich jeweils seitlich des Tastschiebers befindet und bei einer Bewegung des Mitnehmers aus der Mittelstellung heraus durch eine Bewegung zur Mitte hin den Tastschieber beaufschlagt. Dann baut aber der Mitnehmer relativ groß, so daß der Schalter insgesamt groß wird. Man kann jedoch auch einen einzigen Nocken vorsehen, der sich zwischen den beiden Tastschiebern befindet. In diesem Fall können die beiden Tastschieber nicht beliebig nahe aneinander herangebracht werden, da der Nocken wegen des gewünschten Schaltwinkels eine bestimmte Größe nicht unterschreiten darf.

Es wird deshalb eine Ausführung besonders bevorzugt, bei der gemäß Anspruch 6 in der Mittelstellung des Mitnehmers jeder Tastschieber gegen die Kraft der ihn belastenden Feder niedergedrückt ist und bei einer Bewegung des Mitnehmers aus der Mittelstellung heraus nur der eine Tastschieber vom Mitnehmer frei wird und daß sich der erste und der zweite Festkontakt auf der dem Mitnehmer abgewandten Seite des jeweiligen Schnappkontaktbalkens befindet.

Damit der Schalter senkrecht zur Bewegungsrichtung des Mitnehmers klein gehalten werden kann, sollen gemäß Anspruch 7 die inneren Enden der beiden Schnappkontaktbalken einander zugewandt sein und sich die beiden Tastschieber zwischen den beiden Schnappkontaktbalken befinden.

In Kraftfahrzeugen mit Warnschaltern werden elektrische Verdrahtungen benutzt, die es notwendig machen, daß der Blinkerschalter auch in der Mittelstellung des Mitnehmers geschlossene Kontakte besitzt. Für den Einsatz mit einem Warnschalter sind deshalb gemäß Anspruch 8 ein dritter bzw. vierter Festkontakt angeordnet, der dem ersten bzw. zweiten Festkontakt bezüglich des jeweiligen Schnappkontaktbalkens gegenüberliegt und der von dem jeweiligen Schnappkontaktbalken in der Mittelstellung des Mitnehmers beaufschlagt ist.

Insbesondere in den U.S.A. werden die Bremsleuchten auch als Signalleuchten für eine Fahrtrichtungsänderung oder einen Fahrbahnwechsel benutzt. Dann muß das Fahrzeug mit einem sogenannten 2-Kreis-Blinkerschalter ausgestattet sein. In einem solchen Schalter ist gemäß Anspruch 9 in vorteilhafter Weise ein dritter und ein vierter Schnappkontaktbalken und ein dritter und ein vierter Tastschieber vorhanden, die in gleicher relativer Lage zueinander und zur Mittelstellung des Mitnehmers angeordnet sind, wie der erste und der zweite Schnappkontaktbalken und der erste und der zweite Tastschieber, wobei sich die vier Tastschieber nebeneinander in den Ecken eines Rechtecks befinden. Vorteilhafterweise sind die beiden Tastschieber auf einer Seite der Mittelstellung des Mitnehmers bei einer Betätigung des Mitnehmers wenigstens annähernd zeitgleich verschiebbar, so daß auch die Schnappkontaktbalken, die den Leuchten der einen Seite eines Kraftfahrzeugs zugeordnet sind, zeitgleich betätigt werden.

Um die Anzahl der verschiedenen Einzelteile für verschiedene Typen eines elektrischen Schalters nach der Erfindung zu reduzieren, wird, wenn nur zwei Schnappkontaktbalken notwendig sind, gemäß Anspruch 12 trotzdem dasselbe Schaltergehäuse bzw. dasselbe Schaltergehäuseteil verwendet, das dann Leerplätze für die Anordnung eines dritten und vierten Schnappkontaktbalkens und eines dritten und vierten Tastschiebers entsprechend dem ersten und zweiten Schnappkontaktbalken und dem ersten und zweiten Tastschieber besitzt. In der bevorzugten Ausführung nach Anspruch 13 sind dann der erste und der zweite Schnappkontaktbalken und der erste und der zweite Tastschieber weiter von der Drehachse des Mitnehmers entfernt als die entsprechenden Leerplätze.

Mehrere Ausführungsbeispiele eines erfindungsgemäßen elektrischen Schalters sind in den Zeichnungen dargestellt. Diese Ausführungsbeispiele sind als Blinkerschalter ausgestaltet. Anhand der Figuren der Zeichnungen wird die Erfindung nun näher erläutert.

Es zeigen
- Fig. 1: einen durch die Drehachse des Mitnehmers gehenden Längsschnitt durch ein erstes Ausführungsbeispiel,
- Fig. 2: eine Draufsicht auf die Ausführung in Richtung des Pfeiles A aus Fig. 1,
- Fig. 3: eine Draufsicht auf die bestückte Bodenschale des Ausführungsbeispiels nach Fig. 1,
- Fig. 4: einen Schnitt entlang der Linie IV-IV aus Fig. 3,
- Fig. 5: eine Ansicht der Seite des Mitnehmers, die der Bodenschale zugekehrt ist,
- Fig. 6: ein Schaltbild zur internen Verdrahtung des ersten Ausführungsbeispiels, das als 2-Kreis-Blinkerschalter mit einem Warnschalter kombiniert ist,
- Fig. 7: eine Unteransicht der Bodenschale, aus der interne Verbindungen des ersten Ausführungsbeispiels ersichtlich sind,
- Fig. 8: eine Teilansicht der Bodenplatte eines zweiten Ausführungsbeispiels das als 2-Kreis-Blinkerschalter ohne das Vorhandensein eines Warnschalters ausgebildet ist,
- Fig. 9: einen Schnitt entlang der Linie IX-IX aus Fig. 8,
- Fig. 10: ein Schaltbild für das zweite Ausführungsbeispiel,
- Fig. 11: eine Draufsicht auf die Bodenschale eines 1-Kreis-Blinkerschalters, der nicht mit einem Warnschalter kombiniert ist,
- Fig. 12: ein Schaltbild der Ausführung nach Fig. 11 und
- Fig. 13: ein Schaltbild eines vierten Ausführungsbeispiels, das als 1-Kreis-Blinkerschalter mit einem Warnschalter kombiniert ist.

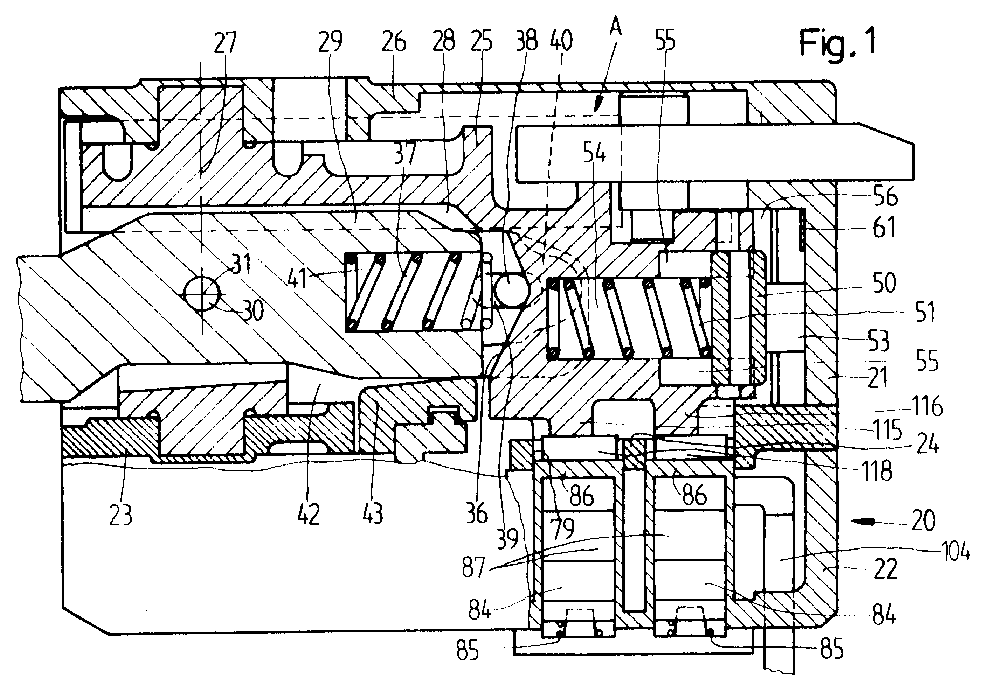

Bei dem in Fig. 1 gezeigten elektrischen Schalter handelt es sich um einen Lenkstockschalter, bei dem in einem Gehäuse 20, zu dem ein kastenförmiges Oberteil 21 aus Zinkdruckguß und eine Bodenschale 22 aus Kunststoff sowie eine erste Zwischenplatte 23 und eine zweite Zwischenplatte 24 gehören, ein Mitnehmer 25 so in der Decke 26 des Oberteils 21 und in der Zwischenplatte 23 gelagert ist, daß er um eine Achse 27 in einer allgemein als horizontal bezeichneten Ebene verschwenkt werden kann. In einen Hohlraum 28 des Mitnehmers 25 ragt ein Schalthebel 29 hinein, der über einen Stift 30, dessen Achse 31 senkrecht durch die Achse 27 geht, in einer allgemein als vertikal bezeichneten Ebene schwenkbar am Mitnehmer 25 gelagert ist. Eine dem Hohlraum 28 zugekehrte Wand des Mitnehmers 25 ist als V-förmige Schaltkurve 36 ausgebildet, gegen die von einer Schraubendruckfeder 37 eine Rastrolle 38 gedrückt wird, die in zwei Langlöchern 39 linear geführt ist, die sich in zwei seitlich an der Schaltkurve 36 vorbeigehenden Ohren 40 des Schalthebels 29 befinden. Die Schraubendruckfeder 37 ist in eine Sackbohrung 41 des Schalthebels 29 eingesetzt.

In der in Fig. 1 gezeigten bezüglich des Mitnehmers 25 stabilen Nullstellung des Schalthebels 29 befindet sich die Rastrolle 38 in der Spitze der Schaltkurve 36. Außerdem liegt der Schalthebel 29 zur Decke des Gehäuseoberteils 21 hin am Mitnehmer 25 an. Aus der Nullstellung kann der Schalthebel deshalb, nach Fig. 1 betrachtet, werden, nur im Uhrzeigersinn um die Achse 31 verschwenkt werden, wobei er einen durch einen Durchbruch 42 im Mitnehmer 25 an ihm anliegenden Schieber 43 betätigt. Wird der Schalthebel 29 um die Achse 27 verschwenkt, so dreht er den Mitnehmer 25 mit. Ausgehend von einer stabilen Mittelstellung, sind für den Schalthebel 29 und den Mitnehmer 25 in der horizontalen Schwenkebene nach beiden Seiten hin eine selbstauslösende, durch einen Druckpunkt gekennzeichnete Zwischenstellung und eine stabile Schaltstellung vorgesehen. Dieses Schaltverhalten wird durch eine Rastsystem erhalten, zu dem eine Rastrolle 50, eine Schraubendruckfeder 51 und zwei im Gehäuse 20 drehbar gelagerte und jeweils mit einer Schaltkurve 52 versehene Rasthebel 53 gehören. Die Schraubendruckfeder 51 ist in eine Sackbohrung 54 des Mitnehmers 25 aufgenommen und stützt sich einerseits am Boden dieser Sackbohrung und andererseits an der Rastrolle 50 ab. Diese ist in zwei sich bezüglich der Achse der Sackbohrung 54 gegenüberliegenden, länglichen und zu den Rasthebeln 53 hin offenen Ausnehmungen 55 des Mitnehmers so geführt, daß sie sich in Richtung der Kraft der Schraubendruckfeder 51 gegenüber dem Mitnehmer 25 geradlinig bewegen kann, in Schaltrichtung dagegen fest am Mitnehmer gehalten ist.

Jeder Rasthebel 53 ist auf einem Stift 56 gelagert, der mit einem Ende in eine nicht dargestellte Bohrung des Gehäuseoberteils 21 mit Paßsitz eingesetzt ist. Die beiden Schaltkurven 52 laufen in der Mitte zwischen den beiden Drehachsen der Rasthebel 53 zu einer Rastmulde zusammen, in die in der Mittelstellung des Mitnehmers 25 die Rastrolle 50 von der Schraubendruckfeder 51 gedrückt wird. Die beiden Rasthebel 53 liegen dabei am Gehäuseoberteil 21 an. Damit ist eine stabile Mittelstellung des Mitnehmers 25 und des Schalthebels 29 gewährleistet. Von der Rastmulde aus steigt jede Schaltkurve nach außen hin an und endet in einem Abschnitt 60, der so steil ist, daß er als unüberwindbarer Anschlag für die Rastrolle wirkt. Der Anschlag ist so gelegt, daß die Rastrolle 50 vom Totpunkt, an dem sie auch ohne Anschlag die Rasthebel 53 verschwenken würde, noch ein Stück entfernt ist, wenn sie gegen den Anschlag stößt. Wird der Mitnehmer 25 aus der Mittelstellung heraus- und damit die Rastrolle 50 auf einer der beiden Schaltkurven 52 entlangbewegt, so bemerkt man an einem zur weiteren Verschwenkung des Mitnehmers 25 deutlich ansteigenden notwendigen Kraftaufwand, daß eine Zwischenstellung erreicht ist, in der die Rastrolle 50 gegen den Abschnitt 60 einer Schaltkurve 52 gestoßen ist. Läßt man in dieser Zwischenstellung den Schalthebel 29 los, so kehren er und der Mitnehmer 25 selbsttätig wieder in die Mittelstellung zurück.

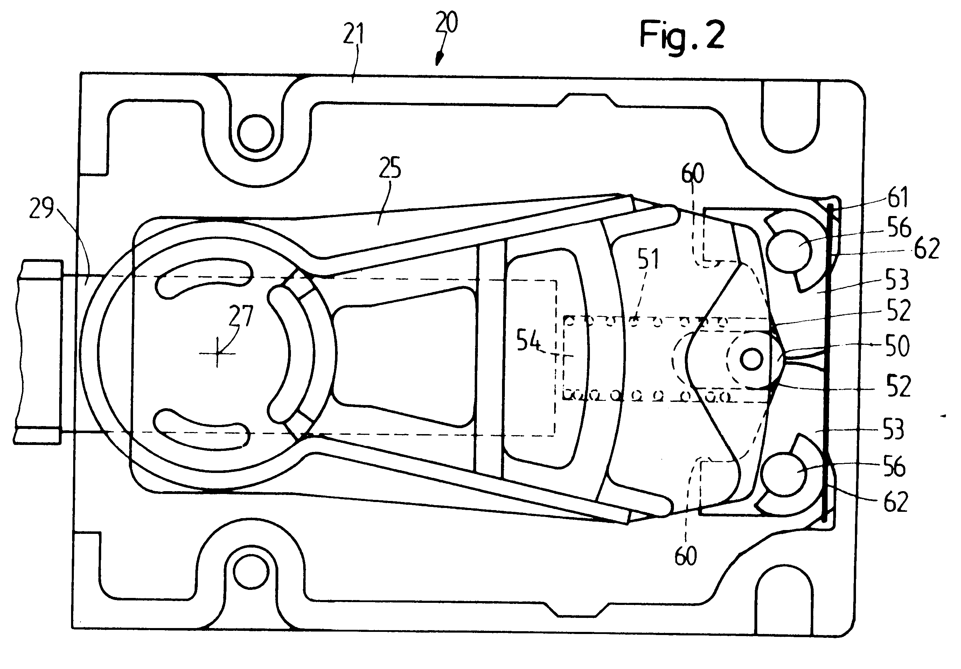

Wird dagegen der Mitnehmer 25 über die Zwischenstellung hinausbewegt, so wird der entsprechende Rasthebel 53 verschwenkt. Bis zum Erreichen des Totpunkts der Verschwenkung ist dazu eine große äußere Kraft notwendig. Danach kann die Verschwenkung allein aufgrund der Feder 51 erfolgen. Am Ende der Bewegung liegt der Rasthebel 53 an einer anderen Stelle wieder am Gehäuseoberteil 21 an. Der als Anschlag dienende Abschnitt 60 jeder Schaltkurve 52 ist so steil, daß er nach dem Verschwenken des entsprechenden Rasthebels als Rastmulde für die Rastrolle 50 wirkt. Der Mitnehmer 25 und der Schalthebel 29 nehmen somit wieder eine stabile Schaltstellung ein. Damit jeder Rasthebel 53 auch dann seine Lage beibehält, wenn er nicht von der Rastrolle 50 beaufschlagt wird, liegt eine Blattfeder 61, die sich zwischen den Rasthebeln 53 und dem Gehäuseoberteil 21 von einem Rasthebel zum anderen erstreckt, jeweils an einer Abflachung 62 der beiden Rasthebel 53 an. Ein Verschwenken eines Rasthebels führt zu einer stärkeren Verspannung der Blattfeder 61, so daß diese die Rasthebel in den in Fig. 2 gezeigten Positionen zu halten sucht.

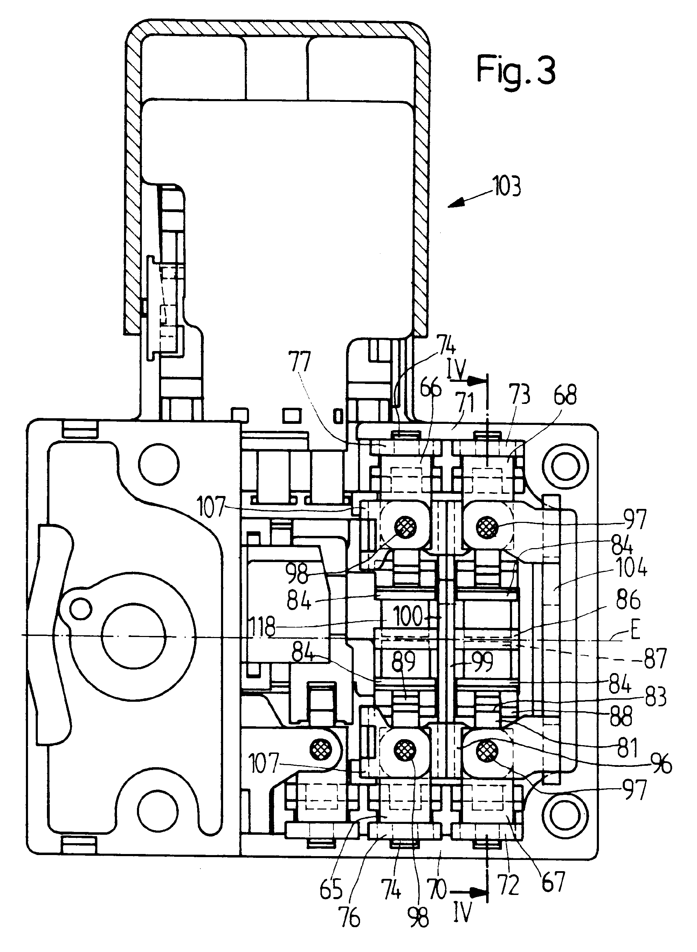

Durch ein Verschwenken des Mitnehmers 25 in eine bestimmte Richtung aus der Mittelstellung heraus oder in diese zurück werden jeweils zwei von vier beweglichen Kontakten 65, 66, 67 und 68 betätigt, die in die Bodenschale 22 eingesetzt sind. Jeder bewegliche Kontakt ist als länglicher Schnappkontaktbalken ausgebildet, der mit einem äußeren Ende 69 unmittelbar an einer Seitenwand 70 bzw. 71 der Bodenschale 22 an einem Festkontakt 72 , 73, 76 oder 77 schwenkgelagert ist. Der Schnappkontaktbalken ragt dazu mit einem schmalen Fortsatz 74 durch einen Durchbruch 75 des Festkontakts hindurch. Die Schnappkontaktbalken 65 und 67 befinden sich mit ihren äußeren Enden an der Seitenwand 70 und die Schnappkontaktbalken 66 und 68 mit ihrem äußeren Ende an der gegenüberliegenden Seitenwand 71 der Bodenschale 22. Außerdem sind die Schnappkontaktbalken 65 und 66 einerseits und die Schnappkontaktbalken 67 und 68 andererseits jeweils symmetrisch bezüglich einer Mittelstellung des Mitnehmers 25 angeordnet, in der sich der Mitnehmer 25 symmetrisch beidseits der in Fig. 3 eingezeichneten Mittelebene E befindet. Alle Schnappkontaktbalken sind so gelagert, daß sie in einer Ebene verschwenkt werden können, die senkrecht auf der Bodenschale und senkrecht auf der Ebene E steht.

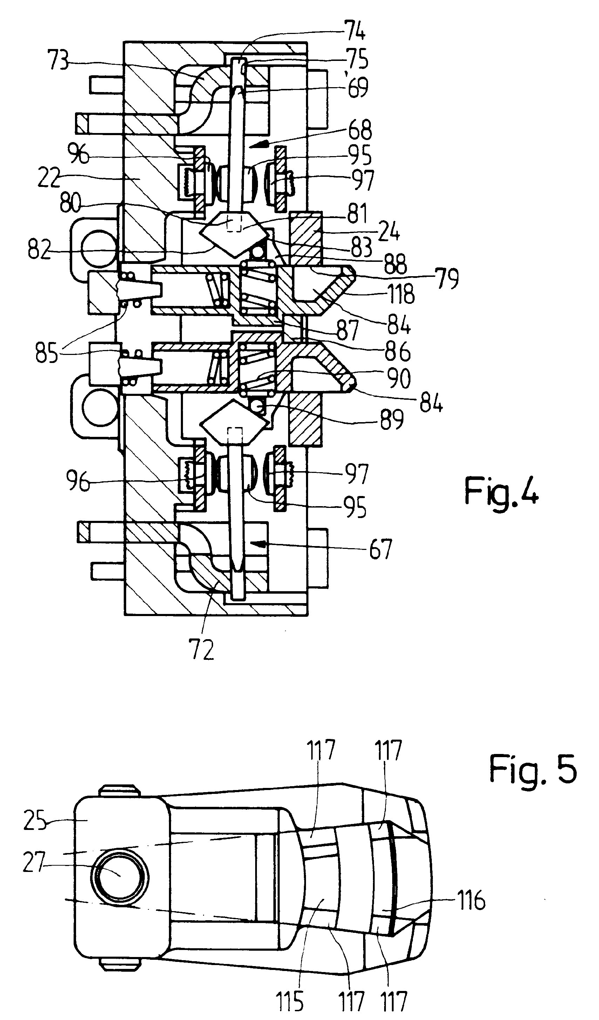

An seinem inneren Ende 80 trägt jeder Schnappkontaktbalken 65, 66, 67 oder 68 einen Rastkörper 81 mit einem Keilprofil, das zwei Flanken 82 und 83 aufweist und dessen Spitze zum bezüglich der Ebene E gegenüberliegenden Rastkörper zeigt. Vor dem inneren Ende jedes Schnappkontaktbalkens ist ein Tastschieber 84 in der Bodenschale 22 so geführt, daß er in Richtung der Achse 27 des Mitnehmers 25 geradlinig bewegt werden kann. Jeder Tastschieber 84 wird von einer Schraubenfeder 85, die sich an der Bodenschale 22 und am jeweiligen Tastschieber 84 abstützt, nach oben hin in Richtung auf den Mitnehmer 25 zu gedrückt. Der Weg nach oben ist allerdings durch einen Steg 86 der Bodenschale begrenzt, an den ein Tastschieber 84 mit einer Schulter 87 anschlagen kann. Jeder Schieber wird zusätzlich von der Zwischenplatte 24 geführt, die mit Öffnungen 79 versehen ist, durch die die Tastschieber 84 an den Mitnehmer 25 herankommen können. Insbesondere ist, wie die Fig. 4 zeigt, jeder Tastschieber 84 an der der Schulter gegenüberliegenden Seite durch die Zwischenplatte 24 geführt, so daß die Schulter 87 dem Steg 86 nicht ausweichen kann, andererseits der Tastschieber jedoch vor dem Aufsetzen der Zwischenplatte 24 leicht in die Bodenplatte 22 eingesetzt werden kann. In zwei Laschen 88 eines jeden Tastschiebers 84, die den Rastkörper 81 eines Schnappkontaktbalkens seitlich umfassen, ist eine Rastrolle 89 so geführt, daß sie quer zur Bewegungsrichtung des Tastschiebers 84 und in Längsrichtung eines Schnappkontaktbalkens bewegbar ist. Von einer Schraubenfeder 90, die zwischen einem Tastschieber 84 und einer Rastrolle 89 eingespannt ist, wird diese gegen eine Flanke des Rastkörpers 81 am zugehörigen Schnappkontaktbalken gedrückt.

Die Zuordnung zwischen einem Tastschieber 84 und einem der Schnappkontaktbalken ist für alle Schnappkontaktbalken 65, 66, 67 und 68 die gleiche. Darüberhinaus sind auch alle Schnappkontaktbalken identisch zueinander. Ebenso stimmt die Anordnung der Schnappkontaktbalken 67 und 68 sowie der zugehörigen Tastschieber 84 mit der Anordnung der Schnappkontaktbalken 65 und 66 und der zugehörigen Tastschieber 84 überein. Es befinden sich die Schnappkontaktbalken 67 und 68 lediglich weiter von der Drehachse 87 des Mitnehmers 25 entfernt als die Schnappkontaktbalken 65 und 66. Die vier Tastschieber 84 sind, wie insbesondere die Fig. 3 zeigt, benachbart zueinander in den vier Ecken eines Rechtecks untergebracht.

Zwischen seiner Lagerstelle und seinem Rastkörper 81 ist an dem Schnappkontaktbalken 67 ein Doppelkontaktniet 95 befestigt, der in der einen Schaltstellung des Schnappkontaktbalkens 67 einen Festkontakt 96, der sich auf der einen Seite des Schnappkontaktbalkens 67 nahe an dem Grunde der Bodenschale 22 befindet, und in der anderen Schaltstellung des Schnappkontaktbalkens 67 einen Festkontakt 97 beaufschlagt, der auf der anderen Seite des Schnappkontaktbalkens 67 angeordnet ist. Ebenso sind für den Schnappkontaktbalken 68 ein Festkontakt 96 und ein Festkontakt 97 vorhanden. Den beiden Schnappkontaktbalken 65 und 66 sind in gleicher Weise jeweils ein Festkontakt 96 und ein Festkontakt 98 zugeordnet, dessen Lage bezüglich des jeweiligen Schnappkontaktbalkens 65 bzw. 66 der Lage eines Festkontakts 97 relativ zu einem Schnappkontaktbalken 67 oder 68 entspricht.

Alle Festkontakte 96, 97 und 98 sind an Metalblechen befestigt, die die Bodenschale 22 nach außen durchstoßen. Die beiden Festkontakte 96 für die Schnappkontaktbalken 67 und 68 befinden sich an einem Metalblech 99 und die beiden Festkontakte 96 für die Schnappkontaktbalken 65 und 66 an einem Kontaktblech 100, das zusammen mit dem Kontaktblech 99 und in elektrisch leitendem Kontakt mit diesem durch die Bodenschale 22 hindurchgeführt ist. Auf der Rückseite der Bodenschale 22 sind die beiden Metallbleche 99 und 100 über ein Kabel 101 mit einem Festkontakt 102 eines Warnschalters 103 verbunden, der bei dem vorliegenden Ausführungsbeispiel mit dem Blinkerschalter kombiniert ist. Die beiden Festkontakte 97 befinden sich an einem Metallblech 104, das auf der Rückseite der Bodenschale 22 über ein Kabel 105 mit einem Festkontakt 106 des Warnschalters 103 verbunden ist. Die beiden Festkontakte 98 schließlich befinden sich an netallblechen 107, die auf der Rückseite der Bodenschale 22 untereinander und mit einem Festkontakt 108 des Warnschalters 103 über ein zusätzliches Metallblech 109 elektrisch leitend verbunden sind.

Der Mitnehmer 25 besitzt an seiner der Bodenschale 22 zugewandten Unterseite zwei vorstehende Nocken 115 und 116, die in Schwenkrichtung des Mitnehmers 25 so lang sind, daß in der Mittelstellung des Mitnehmers 25 der Nocken 115 die beiden Schnappkontaktbalken 65 und 66 zugeordnete lastschieber 84 und der Nocken 116 die beiden den Schnappkontaktbalken 67 und 68 zugeordneten Tastschieber 84 gegen die Kraft der Federn 85 niederdrücken. In der Mittelstellung des Mitnehmers 25 beaufschlagen die Doppelkontaktniete 95, also die Festkontakte 97 und 98, die sich oberhalb der Schnappkontaktbalken befinden. An beiden Enden sind die Nocken 115 und 116 mit Gleitschrägen 117 versehen, die mit Gleitschrägen 118 an den Tastschiebern 84 zusammenwirken. Natürlich ist die insbesondere aus Fig. 1 ersichtliche Vertiefung zwischen den beiden Nocken 115 und 116 nicht unbedingt notwendig, so daß die beiden Nocken wie ein einziger Nocken erscheinen würden. Die beiden Nocken sind kreisbogenförmig gekrümmt, so daß bei einer Verschwenkung des Mitnehmers 25 ihre Lage bezüglich der Tastschieber 84 senkrecht zur Schwenkrichtung unverändert bleibt. Wie man deutlich aus Fig. 5 ersieht, führt die Verlängerung einer Verbindungslinie zwischen den beiden gleichseitigen Enden der beiden Nocken 115 und 116 im Abstand an der Drehachse 27 des Mitnehmers 25 vorbei. Die Nocken enden also nicht auf einem Radiusstrahl. Durch entsprechende Wahl des Abstands wird nun erreicht, daß die beiden Tastschieber 84 der beiden Schnappkontaktbalken 65 und 67 bzw. 66 und 68 und damit auch die Schnappkontaktbalken zumindest annähernd zeitgleich bewegt werden, wenn der Mitnehmer 25 verschwenkt wird.

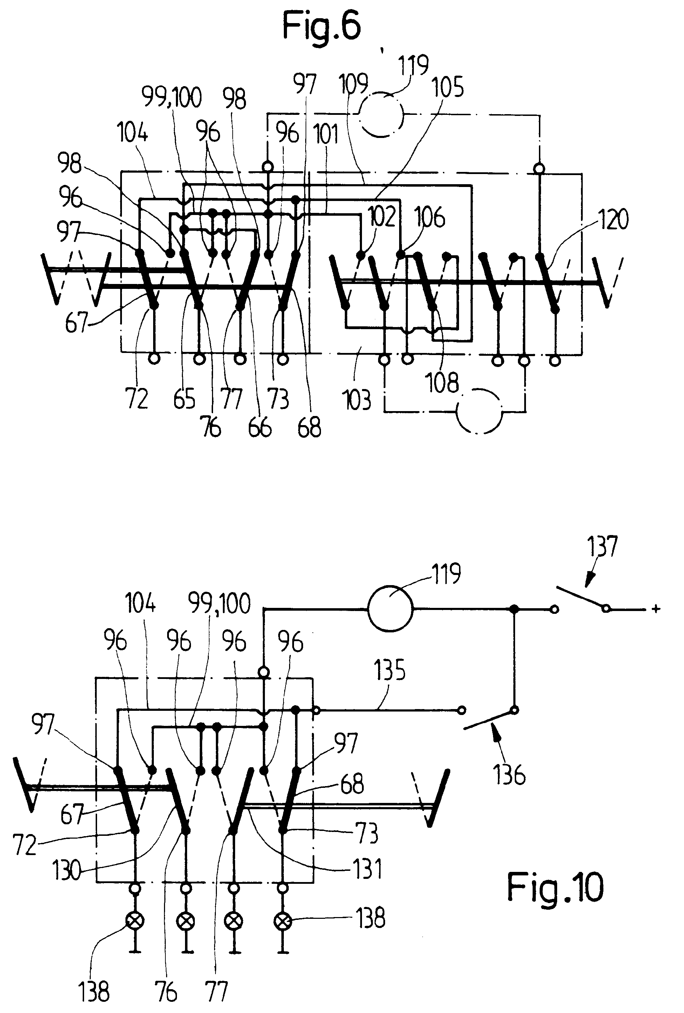

Anhand der systematischen Darstellung nach Fig. 6 kann man einen Überblick darüber gewinnen, welche Festkontakte und Außenanschlüsse in den verschiedenen Stellungen des Mitnehmers 25 miteinander verbunden sind. Die Positionen der Schnappkontaktbalken 65 bis 68 in der Mittelstellung des Mitnehmers 25 sind mit durchgehenden Linien gezeichnet. Man erkennt, daß die Schnappkontaktbalken 67 und 68 die Festkontakte 72 und 73 über die Festkontakte 97, das Metallblech 104 und das Kabel 105 mit dem Festkontakt 106 des Warnschalters 103 verbinden. Die Schnappkontaktbalken 65 und 66 verbinden die Festkontakte 76 und 77 über die Festkontakte 98 und das Metallblech 109 mit dem Festkontakt 108 des Warnschalters.

Wird nun der Mitnehmer 25 in der Ansicht nach Fig. 2 im Uhrzeigersinn aus der Mittelstellung bewegt, so werden die Tastschieber 84 der beiden Schnappkontaktbalken 66 und 68 von den Nocken 115 und 116 freigegeben und bewegen sich aufgrund der Druckfeder 85 nach oben, bis die Schulter 87 am Steg 86 anliegt. Während dieser Bewegung werden die Schnappkontaktbalken 66 und 68 schlagartig umgestellt und liegen nun mit ihren Kontaktnieten 95 an den Festkontakten 96 an. Ist der Blinkerschalter an das Bordnetz eines Kraftfahrzeugs angeschlossen, so leuchten nun die Blinkleuchten auf der rechten Seite des Fahrzeugs auf. Da die Festkontakte 96 über einen Blinkgeber 119 und einen beweglichen Kontakt 120 im Warnschalter 103 und einen nicht näher dargestellten Zündanlaßschalter mit dem positiven Pol einer Spannungsquelle verbunden sind. Wird der Mitnehmer 25 in die umgekehrte Richtung verschwenkt, so beaufschlagen die Schnappkontaktbalken 65 und 67 die Festkontakte 96 und die Blinkleuchten auf der linken Seite des Kraftfahrzeugs leuchten auf.

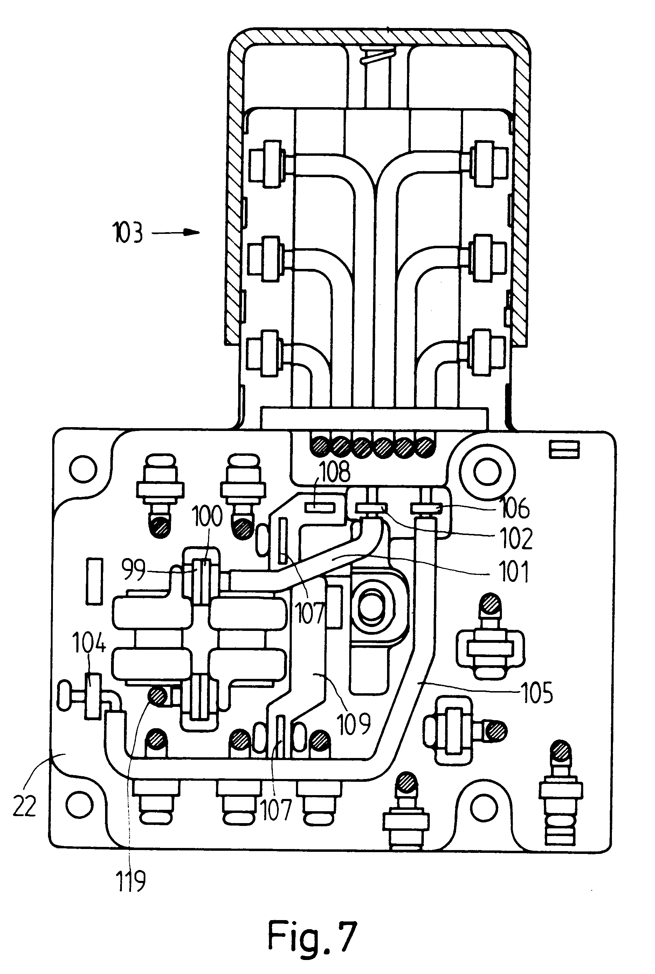

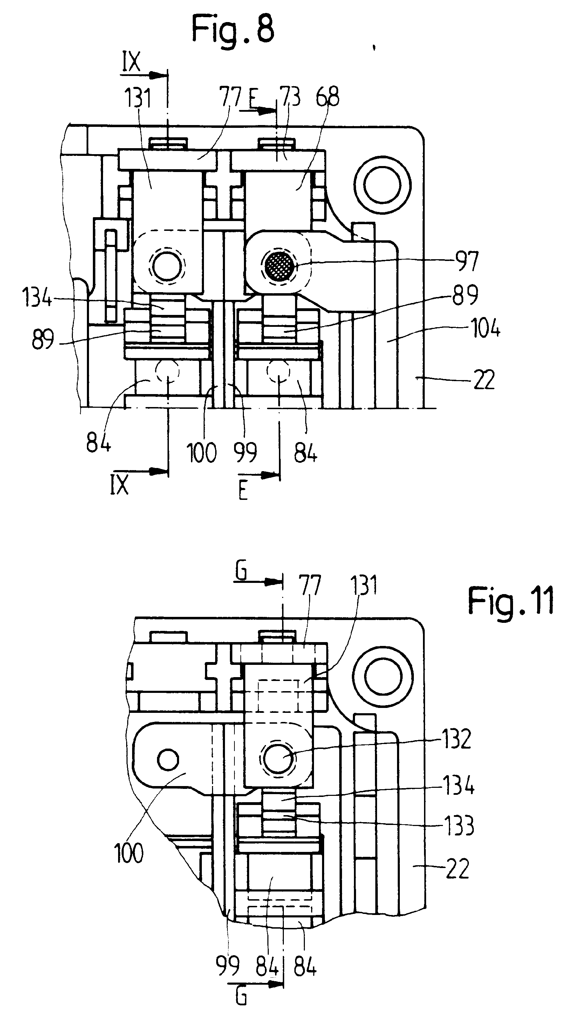

Bei der Ausführung nach den Fig. 8 bis 10 ist ein 2-Kreis-Blinkerschalter nicht mit einem Warnschalter kombiniert. Der Aufbau entspricht jedoch weitgehend dem der Ausführung nach den Fig. 1 bis 7. Es sind wieder vier Schnappkontaktbalken und vier Tastschieber 84 vorhanden, von denen jeweils einer mit einem Schnappkontaktbalken zusammenwirkt. Die Schnappkontaktbalken 67 und 68 sind identisch aus der Ausführung nach den Fig. 1 bis 7 übernommen und befinden sich an denselben Stellen in der Bodenschale 22. Wie bei der Ausführung nach Fig. 1 bis 7 beaufschlagen sie in der Mittelstellung des Mitnehmers 25 mit dem Doppelkontaktniet 95 einen oberenn Festkontakt 97, der an dem Blech 104 sitzt, und in einer seitlichen Stellung des Mitnehmers 25 einen unteren Festkontakt 96, der an dem Metallblech 99 befestigt ist. Der Schnitt entlang der Linie E-E nach Fig. 8 entspricht somit völlig dem Schnitt entlang der Linie IV-IV nach Fig. 3, so daß zwecks näherer Einzelheiten auf die Fig. 4 verwiesen werden kann.

Anstelle der beiden Schnappkontaktbalken 65 und 66 des Ausführungsbeispiels nach den Fig. 1 bis 7 sind nun zwei Schnappkontaktbalken 130 und 131 verwendet, die in ihrer Form und Lagerung prinzipiell den Schnappkontaktbalken 65 bis 68 entsprechen jedoch nur einen einfachen Kontaktniet 132 besitzen, mit dem sie jeweils einen Festkontakt 96 beaufschlagen können. Ein bei der Ausführung nach den Fig. 1 bis 7 vorhandener oberer Festkontakt 98 fehlt. Darüberhinaus weichen die Schnappkontaktbalken 130 und 131 auch in der Form des Rastkörpers, der mit der am Tastschieber 84 geführten und federnd abgestützten Rastrolle 89 zusammenwirkt, von den Schnappkontaktbalken 65 bis 68 ab. Und zwar ist dieser Rastkörper 133 seitlich mit einem Vorsprung 134 versehen, der in der einen Endstellung eines Schnappkontaktbalkens 130 bzw. 131 an der Zwischenplatte 24 anschlägt.

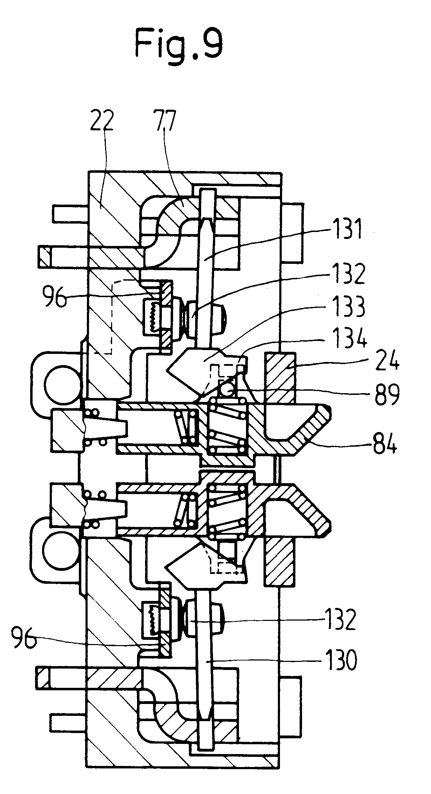

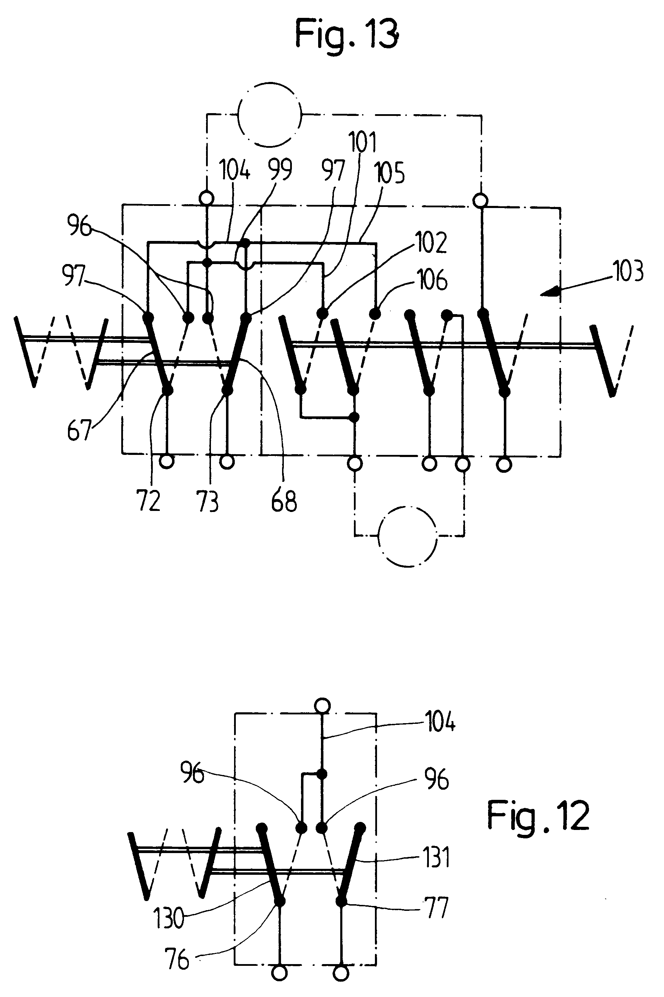

In Fig. 10 ist das Schaltbild der Ausführung nach den Fig. 8 und 9 gezeichnet, aus dem hervorgeht, welche elektrische Kontakte in den einzelnen Schaltstellungen des Mitnehmers 25 geschlossen oder offen sind. Die Schnappkontaktbalken 67, 68, 130 und 131 sind mit durchgehenden Linien in Positionen gezeigt, die sie einnehmen, wenn sich der Mitnehmer 25 in der Mittelstellung befindet. Die Schnappkontaktbalken 130 udn 131 berühren keinen Festkontakt. Die Schnappkontaktbalken 67 und 68 verbinden die Festkontakte 72 bzw. 73 mit den Festkontakten 97, die über das Blech 104 und ein Kabel 135 an einen Bremsschalter 136 angeschlossen sind. Wenn die Bremse betätigt wird, wird der Bremslichtschalter 136 geschlossen, so daß bei geschlossenem Zündanlaßschalter 137 die rückwärtigen Signalleuchten 138 eines Kraftfahrzeugs mit Spannung versorgt werden und aufleuchten. Wird der Mitnehmer 25, nach Fig. 2 betrachtet, im Uhrzeigersinn verschwenkt, so beaufschlagen die Schnappkontaktbalken 68 und 131 jeweils einen Festkontakt 96 und verbinden diesen mit einem Festkontakt 73 bzw. 77. Bei geschlossenem Zundanlaßschalter 137 werden die Signalleuchten auf der rechten Seite des Kraftfahrzeugs über den Blinkgeber 119 mit Spannung versorgt und leuchten intermittierend auf. Während einer Verschwenkung des Mitnehmers 25 in die umgekehrte Richtung werden die Schnappkontaktbalken 67 und 130 betätigt, so daß die Signalleuchten auf der linken Kraftfahrzeugseite aufleuchten.

Die Fig. 11 zeigt ausschnittsweise einen 1-Kreis-Blinkerschalter, dessen Schaltbild aus Fig. 12 ersichtlich ist und der nicht mit einem Warnschalter kombiniert ist. Bei diesem Blinkerschalter sind in die Bodenschale 22, die mit der Bodenschale aus den beiden schon beschriebenen Ausführungen identisch ist, lediglich 2 Schnappkontaktbalken 130 und 131 eingesetzt. Die wie bei der Ausführung nach den Fig. 8 und 9 einen einfachen Kontaktniet 132 und einen Rastkörper 133 mit einem Vorsprung 134 besitzen. Ebenfalls sind nur zwei Tastschieber 84 vorhanden. Jedem Schnappkontaktbalken 130 und 131 ist knapp oberhalb des Grundes der Bodenschale 22 ein Festkontakt 96 zugeordnet, der an dem Metallblech 99 sitzt und in der einen der beiden verschwenkten Schaltstellungen des Mitnehmers 25 von dem Kontaktniet 132 des entsprechenden Schnappkontaktbalkens 130 bzw. 131 beaufschlagt werden.

Aus Fig. 11 ist ersichtlich, daß sich der Schnappkontaktbalken 131 und entsprechend auch der Schnappkontaktbalken 130, der Festkontakt 77, an dem der Schnappkontaktbalken 131 schwenkbar gelagert ist und entsprechend auch der Festkontakt 76 und die beiden Tastschieber 84 in denjenigen Aufnahmen der Bodenschale 22 befinden, die weiter von der Achse 27 des Mitnehmers 25 entfernt sind als die leergebliebenen Aufnahmen. Man erkennt außerdem, daß auch das Metallblech 100, allerdings ohne Kontaktniete, montiert ist, so daß das Blech 99 einen festen Sitz in der Bodenschale 22 hat.

Ein Schnitt entlang der Linie G-G aus Fig. 11 entspricht voll dem Schnitt nach Fig. 9, so daß zwecks näherer Einzelheiten auf diese Fig. 9 verwiesen werden kann.

Die Fig. 12 zeigt die Positionen der Schnappkontaktbalken 131 und 132 in der Mittelstellung des Mitnehmers 25. Man sieht, daß in dieser Stellung die Festkontakte 96 nicht von den Kontaktnieten 132 beaufschlagt werden. Bei einer Verschwenkung des Mitnehmers 25 aus der Mittelstellung heraus wird einer der Schnappkontaktbalken 130 bzw. 131 umgeschaltet und verbindet dann den Festkontakt 76 bzw. 77 mit einem Festkontakt 96. Dieser ist wie bei den Ausführungen nach den Fig. 6 und 10 nach der Installation des Blinkerschalters in einem Kraftfahrzeug über das Blech 99 mit einem Blinkgeber verbunden, so daß nach einer Verschwenkung des Mitnehmers 25 die rechten oder linken Blinklampen des Kraftfahrzeugs aufleuchten.

Wird ein 1-Kreis-Blinkerschalter mit einem Warnshalter kombiniert, so werden anstelle der Schnappkontaktbalken 130 und 131 nach Fig. 11 zwei Schnappkontaktbalken 67 und 68 eingesetzt. Außerdem wird ein Metallblech 104 mit zwei Festkontakten 97 wie bei der Ausführung nach den Fig. 1 bis 7 oder bei der Ausführung nach den Fig. 8 bis 10 hinzugefügt. Ein Schnitt in Längsrichtung der Schnappkontaktbalken stimmt voll mit dem Schnitt nach Fig. 4 überein, so daß eine zusäztliche zeichnerische Darstellung nicht notwendig ist. Dem Schaltbild nach Fig. 13 entnimmt man, daß die Festkontakte 96 nun über das Blech 99 und das Kabel 101 wiederum mit einem Festkontakt 102 des Warnschalters 103 verbunden sind. Die Festkontakte 97 sind über das Blech 104 und das Kabel 105 mit dem Festkontakt 106 im Warnschalter verbunden.

Insbesondere bei einem solchen 1-Kreis-Blinkerschalter mit Warnschalter ist es von Vorteil, daß sich die Schnappkontaktbalken 67 und 68, die Festkontakte 72 und 73, an denen die Schnappkontaktbalken schwenkbar gelagert sind und die beiden Tastschieber 84 in den Aufnahmen der Bodenschale 22 befinden, die weiter von der Schwenkachse 27 des Mitnehmers 25 entfernt sind als die leeren Aufnahmen. Denn die beiden Festkontakte 97 können nun leicht über das Metallblech 104 miteinander verbunden sein, während bei einer Anordnung der Teile in den anderen Aufnahmen zur Verbindung der beiden Metallbleche 107 aus Platzgründen wie bei der Ausführung nach den Fig. 1 bis 7 ein zusätzliches Blech 109 notwendig wäre.

## Patentansprüche

1. Elektrischer Schalter, insbesondere Blinkerschalter für Kraftfahrzeuge zur Anzeige einer Fahrtrichtungsänderung oder eines Fahrbahnwechsels, mit einem in einem Schaltergehäuse (20) gelagerten Mitnehmer (25), der vorzugsweise über einen Schalthebel (29) aus einer Mittelstellung heraus nach entgegengesetzten Richtungen bewegbar, insbesondere um eine gehäusefeste Drehachse (27) verschwenkbar ist, gekennzeichnet durch einen ersten Schnappkontaktbalken (65, 67, 130; 66, 68, 131) mit einer Schwenklagerung an einem äußeren Ende (69) nahe einer Seitenwand (70, 71) des Schaltergehäuses (20) und einem Rastkörper (81, 133) an seinem inneren Ende (80), durch einen ersten, von einer Feder (85) belasteten Tastschieber (84), der vor dem inneren Ende (80) des ersten Schnappkontaktbalkens (65, 67, 130; 66, 68, 131) angeordnet ist, der nur bei einer Bewegung des Mitnehmers (25) auf der einen Seite der Mittelstellung vorzugsweise parallel zur Drehachse (27) des Mitnehmers (25) verschiebbar ist und der einen Rastkörper (89) aufweist, der mit dem Rastkörper (81, 133) des Schnappkontaktbalkens (65, 67, 130; 66, 68, 131) federnd zusammenwirkt, durch einen ersten Festkontakt (96; 97, 98) der vom ersten Schnappkontaktbalken (65, 67, 130; 66, 68, 131) nach einer Verschwenkung des Mitnehmers (25) aus der Mittelstellung heraus in die eine Richtung und einer Verschiebung des Tastschiebers (84) beaufschlagbar ist, und durch einen zweiten Schnappkontaktbalken (66, 68, 131; 65, 67, 130), einen zweiten Tastschieber (84) und einen zweiten Festkontakt (97, 98; 96), die bezüglich der Mittelstellung des Mitnehmers (25) symmetrisch zum ersten Schnappkontaktbalken (65, 67, 130; 66, 68, 131), ersten Tastschieber (84) und ersten Festkontakt (96; 97, 98) angeordnet sind, wobei sich die beiden Tastschieber (84), in ihrer Bewegungsrichtung betrachtet, nebeneinander befinden.

2. Elektrischer Schalter nach Anspruch 1, dadurch gekennzeichnet, daß jeder der beiden Schnappkontaktbalken ( 65, 66; 67, 68; 130, 131) dauernd mit jeweils einem weiteren Festkontakt (72, 73; 76, 77) elektrisch leitend verbunden ist.

3. Elektrischer Schalter nach Anspruch 2, dadurch gekennzeichnet, daß ein Schnappkontaktbalken (65, 66, 67, 68, 130, 131) an seinem äußeren Ende (69) schneidenartig an dem ihm zugeordneten weiteren Festkontakt (72, 73; 76, 77) gelagert ist.

4. Elektrischer Schalter nach Anspruch 1, 2 oder 3, dadurch gekennzeichnet, daß jeder Tastschieber (84) von einem Nocken (115, 116) am Mitnehmer (25) beaufschlagbar ist.

5. Elektrischer Schalter nach einem vorhergehenden Anspruch, dadurch gekennzeichnet, daß der Mitnehmer (25) und jeder Tastschieber (84) zusammenwirkende Gleitschrägen (117, 118) aufweisen.

6. Elektrischer Schalter nach einem vorhergehenden Anspruch, dadurch gekennzeichnet, daß in der Mittelstellung des Mitnehmers (25) jeder Tastschieber (84) gegen die Kraft der ihn belastenden Feder (85) niedergedrückt ist und bei einer Bewegung des Mitnehmers (25) aus der Mittelstellung heraus nur der eine Tastschieber (84) vom Mitnehmer (25) frei wird und daß sich der erste und der zweite Festkontakt (96) auf der dem Mitnehmer (25) abgewandten Seite des jeweiligen Schnappkontaktbalkens (65, 66, 67, 68, 130, 131) befinden.

7. Elektrischer Schalter nach einem vorhergehenden Anspruch, dadurch gekennzeichnet, daß die inneren Enden (80) der beiden Schnappkontaktbalken (65, 66; 67, 68; 130, 131) einander zugewandt sind und sich die beiden Tastschieber (84) zwischen den beiden Schnappkontaktbalken (65, 66; 67, 68; 130, 131) befinden.

8. Elektrischer Schalter nach einem vorhergehenden Anspruch, dadurch gekennzeichnet, daß dem ersten bzw. zweiten Festkontakt (96; 97, 98) bezüglich des jeweiligen Schnappkontaktbalkens (65, 66, 67, 68) gegenüberliegend ein dritter bzw. vierter Festkontakt (97, 98; 96) angeordnet ist, der von dem jeweiligen Schnappkontaktbalken (65, 66, 67, 68) in der Mittelstellung des Mitnehmers (25) beaufschlagt ist.

9. Elektrischer Schalter nach einem vorhergehenden Anspruch, dadurch gekennzeichnet, daß ein dritter und ein vierter Schnappkontaktbalken (65, 66; 67, 68) und ein dritter und ein vierter Tastschieber (84) in gleicher relativer Lage zueinander und zur Mittelstellung des Mitnehmers (25) angeordnet sind wie erster und zweiter Schnappkontaktbalken (67, 68; 65, 66) und erster und zweiter Tastschieber (84), wobei sich die vier lastschieber (84) nebeneinander in den vier Ecken eines Rechtecks befinden.

10. Elektrischer Schalter nach Anspruch 9, dadurch gekennzeichnet, daß die beiden Tastschieber (84) auf einer Seite der Mittelstellung des Mitnehmers (25) bei einer Betätigung des Mitnehmers (25) wenigstens annähernd zeitgleich verschiebbar sind.

11. Elektrischer Schalter nach Anspruch 10, dadurch gekennzeichnet, daß der Mitnehmer (25) einen ersten Nocken (115, 116) zur Verschiebung des einen Tastschiebers (84) und einen zweiten Nocken (116, 115) zur Verschiebung des anderen Tastschiebers (84) aufweist und daß die Enden der beiden Nocken (115, 116) auf einer im Abstand an der Drehachse (27) des Mitnehmers (25) vorbeiführenden Linie liegen.

12. Elektrischer Schalter nach einem der Ansprüche 1 bis 8, dadurch gekennzeichnet, daß das Schaltergehäuse (20) Leerplätze für die Anordnung eines dritten und vierten Schnappkontaktbalkens und eines dritten und vierten Tastschiebers entsprechend dem ersten und zweiten Schnappkontaktbalken (65, 66, 67, 68) und dem ersten und zweiten lastschieber (84) besitzt.

13. Elektrischer Schalter nach Anspruch 12, dadurch gekennzeichnet, daß der erste und der zweite Schnappkontaktbalken (67, 68) und der erste und der zweite Tastschieber (84) weiter von der Drehachse (27) des Mitnehmers (25) entfernt sind als die entsprechenden Leerplätze.

14. Elektrischer Schalter nach einem vorhergehenden Anspruch, dadurch gekennzeichnet, daß ein Tastschieber (84) in einer Grundplatte (22) des Schaltergehäuses (20) geführt ist und an einer Seitenfläche eine Schulter (87) besitzt, von der unter der Kraft der den Tastschieber (84) belastenden Feder (85) ein Anschlag (86) an der Grundplatte (22) beaufschlagbar ist, und daß das Schaltergehäuse (20) eine Zwischenplatte (24) besitzt, an der der Tastschieber (84) an der der Schulter (87) gegenüberliegenden Seite geführt ist.

15. Elektrischer Schalter nach einem vorhergehenden Anspruch, dadurch gekennzeichnet, daß das Schaltergehäuse (20) eine Grundplatte (22), ein Oberteil (21) und eine Zwischenplatte (24) zwischen Grundplatte (22) und Oberteil (21) aufweist und daß die Zwischenplatte (24) in einer Stellung eines Schnappkontaktbalkens (130, 131) als Anschlag für diesen dient, wenn sich nur auf einer Seite des Schnappkontaktbalkens (130, 131) ein Festkontakt (96) befindet.

## Claims

1. An electric switch, in particular a turn-signal switch for motor vehicles for indicating a change of direction or a lane change, comprising a carrier (25) mounted in a switch housing (20), which carrier, preferably by means of a switch lever (29), is movable from a central position into opposite directions, in particular, is swivellable about an axis of rotation (27) on the housing,
**characterized** by a first snap contact bar (65, 67, 130; 66, 68, 131) which is provided with a drag bearing at an outer end (69) close to a side wall (70, 71) of the switch housing (20) and a catch (81, 133) at its inner end (80); by a first touch slide (84) loaded by a spring (85) and arranged before the inner end (80) of the first snap contact bar (65, 67, 130; 66, 68, 131), which slide is displaceable only with a movement of the carrier (25) to one side of the central position, preferably in parallel to the axis of rotation (27) of the carrier (25), and which comprises a catch (89) resiliently interacting with the catch (81, 133) of the snap contact bar (65, 67, 130; 66, 68, 131); by a first stationary contact (96; 97, 98) which can be acted upon by the first snap contact bar (65, 67, 130; 66, 68, 131) after swivelling the carrier (25) out of its central position in one direction and displacing the touch slide (84); and by a second snap contact bar (66, 68, 131; 65, 67, 130), a second touch slide (84) and a second stationary contact (97, 98; 96) which, relative to the central position of the carrier (25), are arranged symmetrically to the first snap contact bar (65, 67, 130; 66, 68, 131), the first touch slide (84) and the first stationary contact (96; 97, 98), the two touch slides (84) being positioned one beside the other, when viewed in their moving direction.

2. An electric switch as claimed in claim 1,
**characterized** in that each of the two snap contact bars (65, 66, 67, 68; 130, 131) is permanently connected in an electrically conductive manner with a further stationary contact (72, 73; 76, 77) each.

3. An electric switch as claimed in claim 2,
**characterized** in that a snap contact bar (65, 66, 67, 68, 130, 131) at its outer end (69) is mounted like a cutting edge on the further stationary contact (72, 73; 76, 77) associated with it.

4. An electric switch as claimed in claim 1, 2 or 3,
**characterized** in that each touch slide (84) can be acted upon by a cam (115, 116) on the carrier (25).

5. An electric switch as claimed in any one of the preceding claims,
**characterized** in that the carrier (25) and each touch slide (84) have interacting sliding slopes (117, 188).

6. An electric switch as claimed in any one of the preceding claims,
**characterized** in that, in the central position of the carrier (25), each touch slide (84) is pressed down in opposition to the force of the spring (85) loading it, and in that, with a movement of the carrier (25) out of its central position, only one touch slide (84) is released from the carrier (25), and in that the first and the second stationary contact (96) are positioned on that side of the respective snap contact bar (65, 66, 67, 68, 130, 131) not facing the carrier (25).

7. An electric switch as claimed in any one of the preceding claims,
**characterized** in that the inner ends (80) of the two snap contact bars (65, 66; 67, 68; 130, 131) are facing each other, and the two touch slides (84) are positioned between the two snap contact bars (65, 66; 67, 68; 130, 131).

8. An electric switch as claimed in any one of the preceding claims,
**characterized** in that arranged opposite to the first and the second stationary contact (96; 97, 98), in relation to the respective snap contact bar (65, 66, 67, 68), is a third and a fourth stationary contact (97, 98; 96) which is actuated upon by the respective snap contact bar (65, 66, 67, 68) in the central position of the carrier (25).

9. An electric switch as claimed in any one of the preceding claims,
**characterized** in that a third and a fourth snap contact bar (65, 66; 67, 68) and a third and a fourth touch slide (84) are arranged in the same relative position to each other and to the central positon of the carrier (25) as the first and the second snap contact bar (67, 68; 65, 66) and the first and the second touch slide (84), the four touch slides (84) being positioned one beside the other in the four corners of a rectangle.

10. An electric switch as claimed in claim 9,
**characterized** in that the two touch slides (84) on one side of the central position of the carrier (25) are displaceable upon actuation of the carrier (25) at least substantially simultaneously.

11. An electric switch as claimed in claim 10,
**characterized** in that the carrier (25) is provided with a first cam (115, 116) for displacing the one touch slide (84) and a second cam (116, 115) for displacing the other touch slide (84), and in that the ends of the two cams (115, 116) are positioned on a line passing the axis of rotation (27) of the carrier (25) at a distance therefrom.

12. An electric switch as claimed in any one of claims 1 to 8,
**characterized** in that the switch housing (20) has vacancies for arranging a third and a fourth snap contact bar and a third and a fourth touch slide corresponding to the first and the second contact bar (65, 66, 67, 68) and the first and the second touch slide (84).

13. An electric switch as claimed in claim 12,
**characterized** in that the first and the second snap contact bar (67, 68) and the first and the second touch slide (84) are farther away from the axis of rotation (27) of the carrier (25) than the corresponding vacancies.

14. An electric switch as claimed in any one of the preceding claims,
**characterized** in that one touch slide (84) is guided in a base plate (22) of the switch housing (20) and has a shoulder (87) on one lateral surface which permits to act upon a stop (86) on the base plate (22) under the force of a spring (85) loading the touch slide (84), and in that the switch housing (20) includes an intermediate plate (24) on which the touch slide (84) is guided on the side opposite to the shoulder (87).

15. An electric switch as claimed in any one of the preceding claims,
**characterized** in that the switch housing (20) includes a base plate (22), a top (21) and an intermediate plate (24) between base plate (22) and top (21), and in that the intermediate plate (24) in one position of a snap contact bar (130, 131) serves as a stop for it when a stationary contact (96) is positioned only on one side of the snap contact bar (130, 131).

## Revendications

1. Commutateur électrique, notamment commutateur de clignotant pour des véhicules automobiles pour l'affichage d'un changement de direction de déplacement ou d'un changement de voie de circulation, comportant un organe d'entraînement (25) monté dans un boîtier (20) du commutateur et qui peut être déplacé de préférence par l'intermédiaire d'un levier de commutation (29) depuis une position médiane, dans des directions opposées, et notamment peut pivoter autour d'un axe de rotation (27) solidaire du boîtier, caractérisé par une première barre (65, 67, 130; 66, 68, 131) portant des contacts à déclic comportant un système de tourillonnage au niveau d'une extrémité extérieure (62) proche d'une paroi latérale (70, 71) du boîtier (20) du commutateur, et un élément d'encliquetage (81, 133) situé sur son extrémité intérieure (80), par un premier poussoir (84) chargé par un ressort (85) et qui est disposé devant l'extrémité intérieure (80) de la première barre (65, 67, 130; 66, 68, 131) portant des contacts à déclic et qui peut se déplacer uniquement lors d'un déplacement de l'organe d'entraînement (25) d'un côté de la position médiane, de préférence parallèlement à l'axe de rotation (27) de l'organe d'entraînement (25) et qui possède un élément d'encliquetage (89), qui coopère élastiquement avec l'élément d'encliquetage (81,133) de la barre (65, 67, 130; 66, 68, 131) portant des contacts à déclic, par un premier contact fixe (96, 97, 98), qui peut être chargé par la première barre (65, 66, 130; 66, 68, 131) portant des contacts à déclic, après un pivotement de l'organe d'entraînement (25) à partir de la position médiane, dans une direction et après un déplacement du poussoir (84), et par une seconde barre (66, 68, 131; 65, 67, 130) portant des contacts à déclic, un second poussoir (84) et un second contact fixe (97, 98; 96), qui sont disposés, par rapport à la position de l'organe d'entraînement (25), symétriquement par rapport à la première barre (65, 67, 130; 66, 68, 131) portant des contacts à déclic, au premier poussoir (84) et au premier contact fixe (96; 97; 98), les deux poussoirs (84) étant disposés côte-à-côte lorsqu'on regarde dans leur direction de déplacement.

2. Commutateur électrique selon la revendication 1, caractérisé en ce que chacune des deux barres (65, 66; 67, 68; 130, 131) portant des contacts à déclic est reliée d'une manière électriquement conductrice à respectivement à un autre contact fixe (72, 73; 76, 77).

3. Commutateur électrique selon la revendication 2, caractérisé en ce qu'une barre (65, 66, 67, 68, 130, 131) portant des contacts à déclic est supportée, au niveau de son extrémité extérieure (69), comme une lame, sur l'autre contact fixe (72, 73; 76, 77) qui lui est associé.

4. Commutateur électrique selon la revendication 1, 2 ou 3, caractérisé par le fait que chaque poussoir (84) peut être chargé par une came (115, 116) située sur l'organe d'entraînement (25).

5. Commutateur électrique selon l'une des revendications précédentes, caractérisé en ce que l'organe d'entraînement (25) et chaque poussoir (84) possèdent des surfaces obliques de glissement (117, 118), qui coopèrent entre elles.

6. Commutateur électrique selon l'une des revendications précédentes, caractérisé en ce que lorsque l'organe d'entraînement (25) est dans la position médiane, chaque poussoir (84) est repoussé à l'encontre de la force du ressort (85) qui charge ce poussoir et, lors d'un déplacement de l'organe d'entraînement (25) à partir de la position médiane, seul un poussoir (84) est libéré par l'organe d'entraînement (25) et que les premier et second contacts fixes (87) sont situés sur le côté, qui est tourné à l'opposé de l'organe d'entraînement (25), de la barre respective (65, 66, 67, 68, 130, 131) qui porte les contacts à déclic.

7. Commutateur électrique selon l'une des revendications précédentes, caractérisé en ce que les extrémités intérieures (80) des deux barres (65, 66; 67, 68; 130, 131) portant des contacts à déclic sont tournées l'une vers l'autre et que les deux poussoirs (84) sont situés entre les deux barres (65, 66; 67, 68; 130, 132) portant les contacts à déclic.

8. Commutateur électrique selon l'une des revendications précédentes, caractérisé en ce qu'en vis-à-vis du premier ou du second contact fixe (96; 97, 98), par rapport à la barre respective (65, 66, 67, 68) portant des contacts à déclic, est disposé un troisième ou un quatrième contact fixe (97, 98; 96), qui est chargé par la barre respective (65, 66, 67, 68) portant les contacts à déclic, lorsque l'organe d'entraînement (25) est dans la position médiane.

9. Commutateur électrique selon l'une des revendications précédentes, caractérisé en ce que des troisième et quatrièmes barres (65, 66; 67, 68) portant des contacts à déclic et des troisième et quatrième poussoirs (84) sont disposés dans la même position relative les uns par rapport aux autres et par rapport à la position médiane de l'organe d'entraînement (25) que les première et seconde barres (67, 68; 65, 66) portant des contacts à déclic et les premier et second poussoirs (84), les quatre poussoirs (84) étant disposés côte-à-côte aux quatre coins d'un rectangle.

10. Commutateur électrique selon la revendication 9, caractérisé en ce que les deux poussoirs (84) peuvent être déplacés au moins approximativement simultanément d'un côté de la position médiane de l'organe d'entraînement (25), lors d'un actionnement de l'organe d'entraînement (25).

11. Commutateur électrique selon la revendication 10, caractérisé en ce que l'organe d'entraînement (25) possède une première came (115, 116) servant à déplacer un poussoir (84) et une seconde came (116, 115) servant à déplacer l'autre poussoir (84), et que les extrémités des deux cames (115, 116) sont situées sur une droite qui passe à distance de l'axe de rotation (27) de l'organe d'entraînement (25).

12. Commutateur électrique selon l'une des revendications précédentes, caractérisé en ce que le boîtier (20) du commutateur comporte des emplacements vides pour la mise en place de troisième et quatrième barres portant des contacts à déclic et de troisième et quatrième poussoirs conformément aux première et seconde barres (65, 66, 67, 68) portant des contacts à déclic et aux premier et second poussoirs (84).

13. Commutateur électrique selon la revendication 12, caractérisé en ce que les première et seconde barres (67, 68) portant des contacts à déclic et les premier et second poussoirs (84) sont plus éloignés de l'axe de rotation (27) de l'organe d'entraînement (25) que ne le sont les emplacements vides correspondants.

14. Commutateur électrique selon l'une des revendications précédentes, caractérisé en ce qu'un poussoir (84) est guidé dans une plaque de base (22) du boîtier (20) du commutateur et possède, au niveau d'une surface latérale, un épaulement (87), qui peut charger une butée (86) située sur la plaque de base (22), sous l'action de la force du ressort (85) qui charge le poussoir (84), et que le boîtier (20) du commutateur possède une plaque intermédiaire (24), sur laquelle le poussoir (84) est guidé sur le côté tourné à l'opposé de l'épaulement (87).

15. Commutateur électrique selon l'une des revendications précédentes, caractérisé en ce que le boîtier (20) du commutateur possède une plaque de base (22), une partie supérieure (21) et une plaque intermédiaire (24) située entre la plaque de base (22) et la partie supérieure (21), et que, dans une position d'une barre (130, 131) portant des contacts à déclic, la plaque intermédiaire (24) sert de butée pour cette barre, lorsqu'un contact fixe (87) est situé uniquement d'un côté de la barre (130, 131) portant des contacts à déclic.
